Europäisches Patentamt

(19) European Patent Office

Office européen des brevets

(11) **EP 0 751 367 B1**

(12) **FASCICULE DE BREVET EUROPEEN**

(45) Date de publication et mention
de la délivrance du brevet:
**25.07.2001 Bulletin 2001/30**

(51) Int Cl.⁷: **F41G 7/30**, G05D 1/12

(21) Numéro de dépôt: **96401194.4**

(22) Date de dépôt: **05.06.1996**

(54) **Système de guidage en alignement d'un missile sur une cible**

Vorrichtung zur Lenkung eines Flugkörpers durch Ausrichten auf ein Ziel

Device for guiding a missile by alignment on a target

(84) Etats contractants désignés:
**BE CH DE ES GB IT LI NL SE**

(30) Priorité: **28.06.1995 FR 9507764**

(43) Date de publication de la demande:
**02.01.1997 Bulletin 1997/01**

(73) Titulaire: **AEROSPATIALE MATRA**
**75016 Paris (FR)**

(72) Inventeur: **Dupont, Stéphane**
**91190 Gif sur Yvette (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 206 912**     **EP-A- 0 425 355**
**GB-A- 2 261 133**     **US-A- 4 589 610**
**US-A- 5 208 757**

• **JOURNAL OF GUIDANCE AND CONTROL AND DYNAMICS, vol. 13, no. 6, 1 Novembre 1990, pages 977-983, XP000248896 HEPNER S A R ET AL: "OBSERVABILITY ANALYSIS FOR TARGET MANEUVER ESTIMATION VIA BEARING- ONLY AND BEARING-RATE-ONLY MEASUREMENTS"**
• **PATENT ABSTRACTS OF JAPAN vol. 006, no. 156 (P-135), 17 Août 1982 & JP-A-57 073419 (MITSUBISHI ELECTRIC CORP), 8 Mai 1982,**
• **PATENT ABSTRACTS OF JAPAN vol. 012, no. 008 (P-654), 12 Janvier 1988 & JP-A-62 168206 (MITSUBISHI ELECTRIC CORP), 24 Juillet 1987,**

EP 0 751 367 B1

**Description**

La présente invention concerne un système de guidage en alignement d'un missile sur une cible, plus particulièrement d'un engin antichar.

Le guidage en alignement consiste à asservir le missile sur un axe de consigne qui relie le poste de tir à la cible. Tous les systèmes existants comportent un moyen de mesure de la position du missile à guider par rapport à cet axe de consigne, moyen de mesure généralement appelé : écartomètre. Cette mesure est utilisée par un calculateur de guidage qui détermine la commande à appliquer au missile pour le maintenir sur l'axe de consigne. Par ailleurs, pour assurer la stabilité du missile, tous les systèmes existants comportent un réseau correcteur à avance de phase. Ce principe d'asservissement est généralement performant sur des cibles fixes, mais présente, par principe, un traînage systématique sur des cibles mobiles. On peut alors associer au réseau correcteur un retard de phase (ou réseau intégral) ou un intégrateur pur. Le traînage peut alors être réduit, voire annulé, mais avec un temps de réponse bien supérieur au temps de réponse du missile.

Une autre solution consiste à mesurer la vitesse angulaire de l'axe de consigne et à élaborer un ordre de poursuite proportionnel à cette mesure. Toutefois, cela nécessite l'investissement d'un capteur. De plus, lorsque le calculateur de guidage est embarqué à bord du missile, la mesure n'est pas directement disponible, et doit être transmise par fil ou onde électromagnétique, ce qui représente une contrainte supplémentaire.

La présente invention a pour but d'éviter ces inconvénients. Elle concerne un système de guidage en alignement d'un missile, assurant, par principe, un traînage nul sur une cible mobile, sans surcoût de fabrication. Le système de l'invention doit permettre en outre de filtrer la mesure de position du missile avec un déphasage inférieur à celui d'un réseau correcteur à avance de phase, et d'améliorer ainsi la stabilité du missile.

A cet effet, le système de guidage en alignement d'un missile sur une cible mobile, du type comportant des moyens de mesure écartométrique, pour mesurer la position du missile par rapport à un axe de consigne, et un calculateur de guidage pour fournir des ordres de commande audit missile en fonction desdites mesures écartométriques, est remarquable, selon l'invention, en ce que ledit calculateur de guidage comprend :

- des premiers moyens pour estimer l'état du missile et les mouvements de la cible à partir de la mesure de la position du missile par rapport à l'axe de consigne, obtenue par lesdits moyens de mesure écartométrique, en utilisant un modèle du comportement dynamique du missile, ainsi qu'un modèle cinématique de la cible ;
- des deuxièmes moyens, destinés à élaborer des ordres de poursuite et des consignes pour l'asservissement du missile, reliés auxdits premiers moyens ; et
- des troisièmes moyens pour élaborer l'ordre de commande appliqué au missile, reliés auxdits premiers et deuxièmes moyens, de façon, d'une part, à fournir auxdits premiers moyens ledit ordre de commande et, d'autre part, à recevoir desdits premiers moyens l'état estimé du missile et desdits deuxièmes moyens les ordres de poursuite et les consignes d'asservissement.

La stabilité du missile est ainsi améliorée, tout en garantissant un traînage nul par principe.

Avantageusement, lesdits premiers moyens pour estimer les mouvements de la cible sont constitués par un filtre de Kalman.

Selon une autre caractéristique de l'invention, le système comprend des quatrièmes moyens optionnels de mesure de paramètres autres que la position du missile par rapport à l'axe de consigne, reliés, d'une part, audit missile et, d'autre part, auxdits premiers moyens.

Par ailleurs, le système comprend des cinquièmes moyens destinés au changement de repère de la position du missile d'un repère fixe à un repère mobile, lié à la cible, reliés auxdits moyens de mesure écartométrique.

Les figures du dessin annexé feront bien comprendre comment l'invention peut être réalisée.

La figure 1 est un diagramme synoptique du système de guidage selon l'invention.

La figure 2 est un diagramme synoptique du calculateur de guidage du système de la figure 1.

La figure 3 est un schéma illustrant la mise en oeuvre du système de guidage selon l'invention.

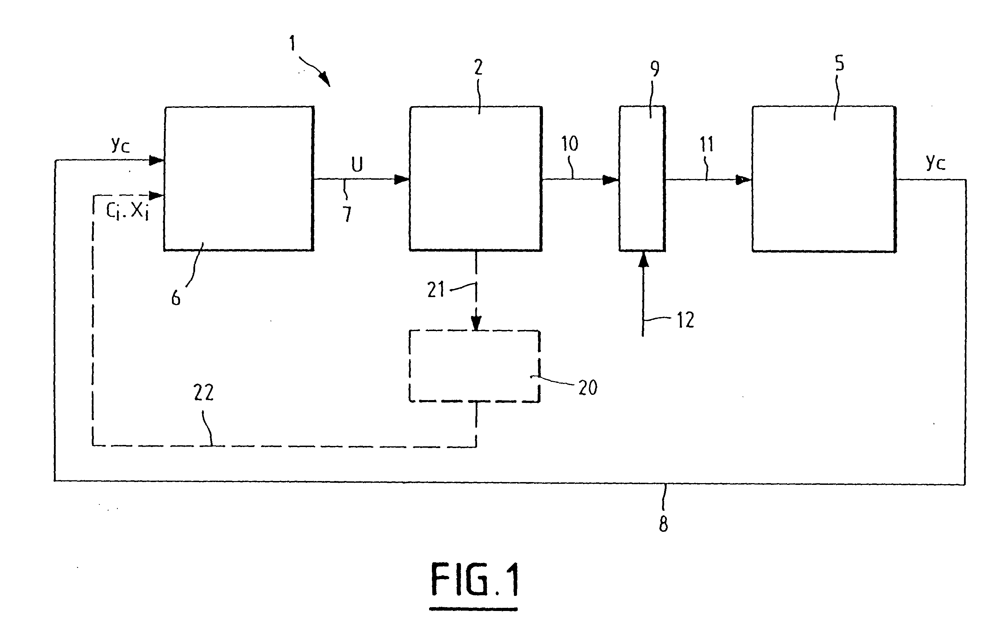

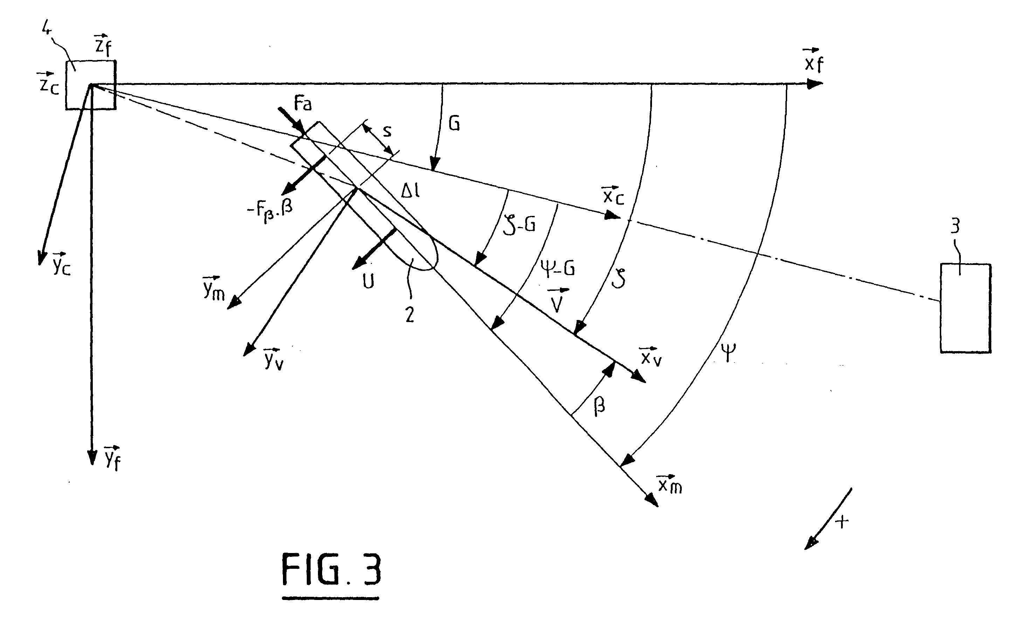

Comme on le voit sur la figure 1, le système de guidage en alignement 1 d'un missile 2 sur une cible mobile 3 (figure 3), lancé à partir d'un poste de tir 4 (figure 3), comprend un écartomètre 5 pour mesurer la position du missile ($y_c$) par rapport à un axe de consigne $\vec{x}_c$ (figure 3), et un calculateur de guidage 6 pour fournir des ordres de commande U au missile 2 (liaison 7) en fonction desdites mesures écartométriques. A cet effet, l'écartomètre 5 est relié au calculateur de guidage 6 par la liaison 8, ainsi bien sûr qu'au missile 2, par l'intermédiaire de moyens 9 destinés au changement de repère de la position du missile d'un repère fixe ($R_f$, $\vec{x}_f$, $\vec{y}_f$, $\vec{z}_f$ sur la figure 3) (liaison 10 sur la figure 1) à un repère mobile, lié à la cible ($R_c$, $\vec{x}_c$, $\vec{y}_c$, $\vec{z}_c$ sur la figure 3) (liaison 11 sur la figure 1), en tenant compte des mouvements de la cible (entrée 12 sur la figure 1).

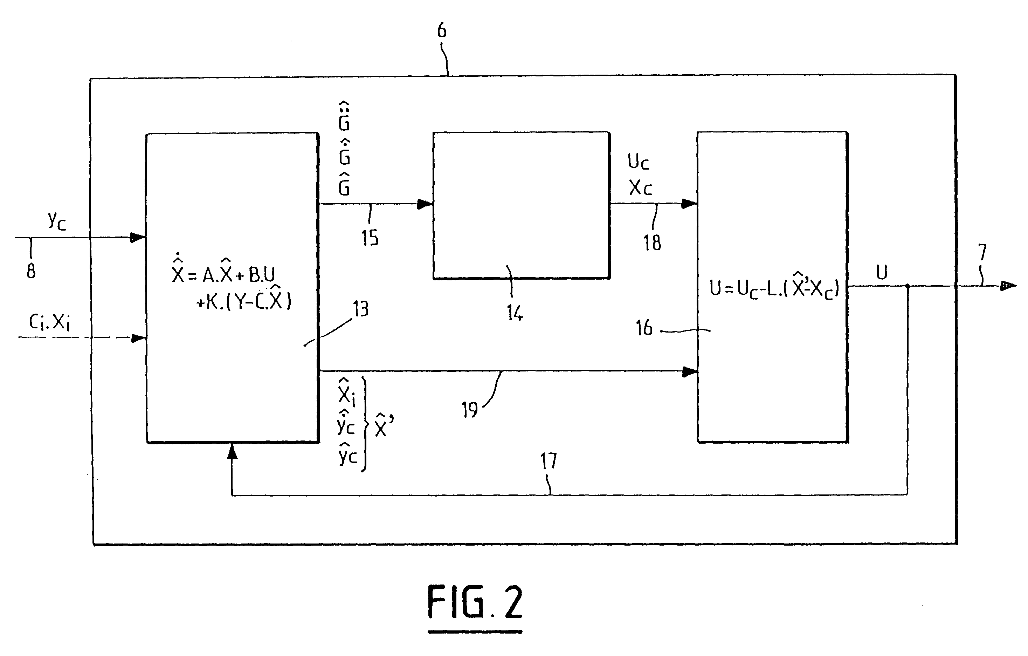

Plus particulièrement, selon l'invention, le calculateur de guidage 6 comprend (figure 2) :

- des premiers moyens 13, notamment un filtre de Kalman, pour estimer l'état du missile et les mouvements de la cible 3 à partir de la position du missile 2 par rapport à l'axe de consigne $\vec{x}_c$, obtenue à partir de l'écartomètre 5, en utilisant un modèle du comportement dynamique du missile 2, ainsi qu'un modèle cinématique de la cible 3 ;
- des deuxièmes moyens 14, destinés à élaborer des ordres de poursuite et des consignes pour l'asservissement du missile 2, reliés aux premiers moyens 13 par une liaison 15 fournissant les mouvements estimés de la cible ; et
- des troisièmes moyens 16 pour élaborer la commande U appliquée au missile 2 (liaison 7, la sortie U des troisièmes moyens 16 étant également appliquée à une entrée des premiers moyens 13 par une liaison 17), lesdits troisièmes moyens 16 recevant, d'une part, les ordres de poursuite et les consignes d'asservissement par la liaison 18 et, d'autre part, l'état estimé du missile 2 par la liaison 19.

Ainsi, l'estimation des mouvements de la cible permet d'élaborer des consignes d'asservissement pour le missile. Pour cela, le calculateur de guidage élaborant au cours du vol des ordres de commande appliqués au missile, ces ordres peuvent être alors appliqués au modèle du missile pour en prédire la trajectoire en repère fixe. L'écart entre cette prédiction et la mesure de position du missile (exprimée dans le repère de l'axe de consigne, ou repère lié à la cible) permet d'estimer le mouvement de l'axe de consigne (position, vitesse et accélération angulaires).

L'estimation du mouvement de la cible n'est cependant pas immédiate et nécessite le choix d'une technique appropriée, notamment le filtrage de Kalman. Il permet d'estimer les mouvements de la cible, mais également de les filtrer, ainsi que de filtrer la mesure de position du missile, ainsi que d'autres mesures éventuelles de l'état du missile (cap, accélération notamment), cela par des capteurs 20 reliés, d'une part, au missile 2 par la liaison 21 et, d'autre part, auxdits premiers moyens 13 par la liaison 22.

Il est ensuite nécessaire de choisir un modèle de la cible. Pour conserver l'accélération de la cible dans l'état estimé, le modèle à "accélération constante" est le plus général.

L'estimation du mouvement du repère mobile (cible) permet ensuite d'élaborer un ordre de poursuite et des consignes pour l'asservissement de l'engin, ce qui annule le traînage sur la cible mobile (gisement et/ou site), avec un faible temps de réponse.

L'estimation peut être réalisée aussi bien dans le plan horizontal (estimation du gisement du repère cible) que dans le plan vertical (estimation du site du repère cible). La structure et le principe étant les mêmes dans les deux plans, on n'exposera que le cas du plan horizontal.

Les repères "fixe" ($R_f$) et "cible" ($R_c$) sont représentés sur la figure 3 (gisement, manoeuvre vers la droite).

Les notations suivantes sont utilisées ci-après :

$\beta$ :   dérapage du missile
$\psi$ :   cap du missile
y :   position du missile suivant $y_c$ (écartométrie du missile)
$\vec{V}$   vitesse du missile
m :   masse du missile
I :   inertie transverse du missile
$M\alpha$ :   gradient de moment de rappel aérodynamique
$F\beta$ :   gradient de portance aérodynamique
Mr :   amortissement aérodynamique en moment
G :   : gisement du repère cible
$\vec{Fa}$ :   : résultante des forces "axiales" appliquées au missile (suivant son axe longitudinal)
$\vec{Fl}$ :   résultante des forces "latérales" appliquées au missile
U :   commande appliquée au missile.

L'équation fondamentale de la dynamique s'écrit, suivant $y_c$ :

$$Fa.\sin(\psi\text{-}G) + Fl.\cos(\psi\text{-}G) = m\,(\ddot{y}_c + 2V\dot{G} + x\ddot{G} - y_c\dot{G}^2)$$

c'est-à-dire, après linéarisation autour de 0 pour $\psi$, G, $y_c$ :

$$\ddot{y}_c = \frac{1}{m}\,\delta F_1 + \frac{Fa}{m}\,\psi - x\ddot{G} - 2V\dot{G} - \frac{Fa}{m}\,G$$

Pour écrire un modèle linéaire de l'ensemble (missile - repère cible), il est nécessaire de choisir un modèle du repère cible.

Pour conserver tous les termes en G (G, $\dot{G}$ et $\ddot{G}$), il faut établir une hypothèse sur $\dddot{G}$. La plus générale est :

$$\overset{\prime\prime\prime}{G} = 0$$

On obtient ainsi le modèle suivant :

$$
\begin{bmatrix}
\dot{X}_i \\
\ddot{Y}_C \\
\dot{Y}_C \\
\overset{\prime\prime\prime}{G} \\
\ddot{G} \\
\dot{G}
\end{bmatrix}
=
\left[
\begin{array}{c|ccccc}
Ai & & & & \bigcirc & \\
\hline
& 0 & 0 & -x & -2V & -(Fa)/m \\
& 1 & 0 & 0 & 0 & 0 \\
\bigcirc & 0 & 0 & 0 & 0 & 0 \\
& 0 & 0 & 1 & 0 & 0 \\
& 0 & 0 & 0 & 1 & 0
\end{array}
\right]
\begin{bmatrix}
X_i \\
\dot{Y}_C \\
Y_C \\
\ddot{G} \\
\dot{G} \\
G
\end{bmatrix}
+
\begin{bmatrix}
B_i \\
\hline
\bigcirc
\end{bmatrix}
U
$$

$$\dot{X} \qquad\qquad\qquad A \qquad\qquad\qquad X \qquad B \quad U$$

$A_i$, $B_i$, $X_i$ décrivent le modèle "interne" du missile.

La mesure minimale pour l'observabilité de G, G, G est $y_c$.

La matrice de mesure écartométrique est de la forme :

$$
Y =
\left[
\begin{array}{cc|ccccc}
& Ci & & & \bigcirc & & \\
\hline
& \bigcirc & 0 & 1 & 0 & 0 & 0
\end{array}
\right]
X
$$

$$C$$

$C_i$ correspondant à des mesures complémentaires éventuelles.

L'équation du filtre complet est alors :

$$\dot{\hat{X}} = A\,\hat{X} + B\,U + K\,(Y - C\,\hat{X})$$

Les gains de Kalman K sont calculés classiquement par résolution de l'équation de Ricatti.

Un modèle de missile antichar particulier est donné ci-après. Pour le modèle "interne" du missile, nous avons retenu les variables d'état : $-\beta$, $\dot{\psi}$ et $\psi$.

Le modèle "repère cible" a été simplifié : $\ddot{G} = 0$.

Une mesure complémentaire a été utilisée : $\psi$

Le modèle complet est alors le suivant :

$$
\underbrace{\begin{bmatrix} -\dot{\beta} \\[4pt] \ddot{\psi} \\[4pt] \dot{\psi} \\[4pt] \ddot{Y}_C \\[4pt] \dot{Y}_C \\[4pt] \ddot{G} \\[4pt] \dot{G} \end{bmatrix}}_{\dot{X}}
=
\underbrace{\left[\begin{array}{ccc|cccc}
\dfrac{-(Fa+F\beta)}{mV} & 1 & 0 & 0 & 0 & 0 & 0 \\[8pt]
\dfrac{M\alpha}{I} & \dfrac{Mr}{I} & 0 & 0 & 0 & 0 & 0 \\[8pt]
0 & 1 & 0 & 0 & 0 & 0 & 0 \\[4pt] \hline
-\dfrac{F\beta}{m} & 0 & \dfrac{Fa}{m} & 0 & 0 & -2V & \dfrac{Fa}{m} \\[8pt]
0 & 0 & 0 & 1 & 0 & 0 & 0 \\[4pt]
0 & 0 & 0 & 0 & 0 & 0 & 0 \\[4pt]
0 & 0 & 0 & 0 & 0 & 1 & 0
\end{array}\right]}_{A}
\underbrace{\begin{bmatrix} -\beta \\[4pt] \dot{\psi} \\[4pt] \psi \\[4pt] \dot{Y}_C \\[4pt] Y_C \\[4pt] \dot{G} \\[4pt] G \end{bmatrix}}_{X}
+
\underbrace{\begin{bmatrix} \dfrac{1}{mV} \\[8pt] \dfrac{\Delta 1}{I} \\[8pt] 0 \\[4pt] \dfrac{1}{m} \\[8pt] 0 \\[4pt] 0 \\[4pt] 0 \end{bmatrix}}_{B} U
$$

avec comme matrice de mesure :

$$
C = \left[\begin{array}{ccc|cccc}
0 & 0 & 1 & 0 & 0 & 0 & 0 \\
0 & 0 & 0 & 0 & 1 & 0 & 0
\end{array}\right]
$$

Pour utiliser l'estimation des mouvements de la cible pour élaborer des consignes d'asservissement, on utilise le principe suivant.

Le principe est de déterminer une trajectoire "nominale" "parfaite" sur cible défilante, en résolvant les équations de la mécanique du vol avec les conditions "d'équilibre".

$y_c = 0$
$\dot{y}_c = 0$
$y_c = 0$
$\dot{x}_i = 0$

On obtient alors un état $X_c$ fonction de $(\hat{G}, \dot{\hat{G}}, \ddot{\hat{G}})$ qui servira de consigne pour l'élaboration de la commande.

La commande $U_c$ associée à l'état $X_c$ sera alors appliquée systématiquement au missile.

Dans le cas du missile antichar (modèle de missile antichar particulier et modèle de repère cible simplifié), $\dot{\hat{G}}$ est utilisé pour élaborer une commande de poursuite :

$$
U_C = K_2 \, \frac{mV}{GAIN} \, \dot{\hat{G}}
$$

GAIN étant le gain statique du missile et $K_2$ étant fonction des caractéristiques cinématiques et dynamiques

du missile :

$$K_2 = 2 - \frac{XFa}{mV^2} \quad (X : \text{éloignement du missile})$$

Dans le cas d'un missile piloté, $\hat{G}$ et $\dot{\hat{G}}$ sont utilisés pour élaborer des consignes sur les retours en cap ($\psi$) et en vitesse de cap ($\dot{\psi}$) :

$$\psi_c = \hat{G} + K_4 \dot{\hat{G}}$$
$$\dot{\psi}_c = K_5 \hat{G}$$

avec :

$$K_4 = K_1 + K_3$$

$$K_1 = X/V$$

$$K_3 = cK_2$$

$$c = \frac{mV\Delta l + Mr}{\Delta l (Fa + F\beta) - M\alpha}$$

$$K_5 = K_2 + \dot{K}_3.$$

On indiquera ci-après comment on peut établir un modèle de missile, à partir d'un exemple de missile à empennage canard, c'est-à-dire dans le cas où la gouverne de commande est en avant du centre de gravité.
Ce modèle permet de prédire la trajectoire du missile en repère fixe. La relation fondamentale de la dynamique, appliquée globalement au missile, permet d'exprimer l'accélération (absolue) du missile en fonction des forces qui lui sont appliquées :

U :        force de commande
Fa :       poussée axiale (moins la traînée)
$F_\beta.\beta$:       force de portance.

Cependant, cette relation ne suffit pas à déterminer l'accélération du missile, car l'une des forces est fonction du dérapage du missile $\beta$ : c'est la force de portance $F_\beta.\beta$. Une seule relation est alors disponible pour deux inconnues ($\Gamma$ l'accélération et $\beta$ le dérapage). On utilise donc le théorème du moment cinétique (issu de la relation fondamentale de la dynamique en prenant en compte les points d'application des forces). On obtient alors une relation entre le cap $\psi$ du missile et son dérapage $\beta$.
$\Gamma$, $\psi$ et $\beta$ étant liés par une relation cinématique ($\Gamma = V(\dot{\psi} + \dot{\beta})$), on peut résoudre les deux équations en $\psi$ et $\beta$ (ou $\Gamma$ et $\psi$).
On donnera ci-après le détail des calculs évoqués ci-dessus :

a) relation fondamentale de la dynamique

$$m \vec{\Gamma} = \Sigma \vec{F} \quad (\text{dm/dt négligé})$$

On va projeter ces vecteurs dans le repère vitesse (c'est le plus commode pour obtenir des relations au moins sensiblement linéaires).

Bilan des forces dans le repère vitesse (suivant $\vec{y}_v$) :

$$U \to U \cos\beta \simeq U$$

$$Fa \to -Fa \sin\beta \simeq -Fa\beta$$

$$F_\beta.\beta \to - F_\beta.\beta.\cos\beta \simeq - F_\beta.\beta$$

Accélération (absolue) exprimée dans le repère vitesse (suivant $\vec{y}_v$) :

$$\vec{\Gamma} = \frac{\overrightarrow{dV}}{dt} = \frac{d}{dt}(V\vec{x}_v) = \dot{V}\vec{x}_v + V\ \dot{\zeta}\ \vec{y}_v$$

On obtient alors l'équation suivante :

$$mV\dot{\zeta} = U - Fa.\beta - F_\beta.\beta$$

$$mV(\dot{\psi} + \dot{\beta}) = U - (Fa + F_\beta)\beta \qquad \zeta = \psi + \beta$$

$$\dot{\beta} = - \frac{Fa + F_\beta}{mV}\ \beta - \dot{\psi} + \frac{1}{mV}\ U$$

b) théorème du moment cinétique

$$I\frac{\overrightarrow{d\Omega}}{dt} = \overrightarrow{\Sigma M} \qquad (\frac{dI}{dt}\ \text{négligé})$$

$$I\ddot{\psi} = - F_\beta.\beta.s + M_r\dot{\psi} + \Delta\ I\ U$$

$$\ddot{\psi} = - \frac{F_\beta.s}{I}\ \beta + \frac{M_r}{I}\ \dot{\psi} + \frac{\Delta\ I}{I}\ U$$

On notera qu'une troisième équation :

$$\ddot{y}_c = - \frac{F_\beta}{m}\ \beta + \frac{Fa}{m}\ \psi - 2v\dot{G} + \frac{Fa}{m}\ G$$

permet de prédire (après intégration) la position du missile en repère cible.

S'il y a un écart avec la mesure, c'est que le gisement G et la vitesse du gisement $\dot{G}$ estimés sont inexacts. Ils sont alors automatiquement corrigés par le filtre de Kalman.

**Revendications**

1.  Système de guidage en alignement d'un missile sur une cible mobile, du type comportant des moyens de mesure écartométrique, pour mesurer la position du missile par rapport à un axe de consigne, et un calculateur de guidage pour fournir des ordres de commande audit missile en fonction desdites mesures écartométriques,
caractérisé en ce que ledit calculateur de guidage (6) comprend :

- des premiers moyens (13) pour estimer l'état du missile et les mouvements de la cible (3) à partir de la mesure de la position du missile (2) par rapport à l'axe de consigne qui relie un poste de tir du missile à la cible, obtenue par lesdits moyens de mesure écartométrique (5), en utilisant un modèle du comportement dynamique du missile (2), ainsi qu'un modèle cinématique de la cible (3) .
- des deuxièmes moyens (14), destinés à élaborer des ordres de poursuite et des consignes pour l'asservissement du missile (2), reliés auxdits premiers moyens (13) ; et
- des troisièmes moyens (16) pour élaborer l'ordre de commande appliqué au missile (2), reliés auxdits premiers (13) et deuxièmes (14) moyens, de façon, d'une part, à fournir auxdits premiers moyens (13) ledit ordre de commande et, d'autre part, à recevoir desdits premiers moyens (13) l'état estimé du missile et desdits deuxièmes moyens (14) des ordres de poursuite et les consignes d'asservissement.

2. Système selon la revendication 1,
caractérisé en ce que lesdits premiers moyens pour estimer les mouvements de la cible sont constitués par un filtre de Kalman (13).

3. Système selon la revendication 1 ou 2,
caractérisé en ce qu'il comprend des quatrièmes moyens optionnels (20) de mesure de paramètres autres que la position du missile par rapport à l'axe de consigne, reliés, d'une part, audit missile (2) et, d'autre part, auxdits premiers moyens (13).

4. Système selon l'une quelconque des revendications 1 à 3,
caractérisé en ce qu'il comprend des cinquièmes moyens (9) destinés au changement de repère de la position du missile (2) d'un repère fixe à un repère mobile, lié à la cible (3), reliés auxdits moyens de mesure écartométrique (5).

**Claims**

1. System for guiding a missile in alignment onto a moving target, of the type including angular deviation measuring means, for measuring the position of the missile with respect to a datum axis, and a guidance computer for supplying control orders to the said missile as a function of the said angular deviation measurements, characterized in that the said guidance computer (6) comprises:

- first means (13) for estimating the state of the missile and the movements of the target (3) on the basis of the measurement of the position of the missile (2) with respect to the datum axis which links a firing post for the missile to the target, obtained by the said angular deviation measuring means (5), by using a model of the dynamic behaviour of the missile (2) as well as a kinematic model of the target (3);
- second means (14) intended to derive tracking orders and datum values for slaving the missile (2), which are linked to the said first means (13); and
- third means (16) for deriving the control order applied to the missile (2), which are linked to the said first (13) and second (14) means, so as, on the one hand, to supply the said first means (13) with the said control order and, on the other hand, to receive the estimated state of the missile from the said first means (13) and tracking orders and the slaving datum values from the said second means (14).

2. System according to Claim 1, characterized in that the said first means for estimating the movements of the target consist of a Kalman filter (13).

3. System according to Claim 1 or 2, characterized in that it comprises four optional means (20) of measuring parameters other than the position of the missile with respect to the datum axis, which are linked, on the one hand, to the said missile (2) and, on the other hand, to the said first means (13).

4. System according to any one of Claims 1 to 3,
characterized in that it comprises fifth means (9) intended to change the reference system for the position of the missile (2) from a fixed reference system to a moving reference system, tied to the target (3), which are linked to the said angular deviation measuring means (5).

**EP 0 751 367 B1**

**Patentansprüche**

1. System zur Lenkung eines Flugkörpers durch Ausrichten auf ein sich bewegendes Ziel des Typs, der Abstandsmeßmittel zur Messung der Position des Flugkörpers in Bezug auf eine Sollachse und einen Lenkrechner umfaßt, der dem genannten Flugkörper in Abhängigkeit von des genannten Abstandsmessungen Steuerbefehle erteilt, dadurch gekennzeichnet, daß der genannte Lenkrechner (6) folgendes umfaßt:

   - erste Mittel (13) zu Einschätzung des Zustands des Flugkörpers und der Bewegungen des Ziels (3) ausgehend vom von den genannte Abstandsmeßmitteln (5) erhaltenen Meßwert der Position des Flugkörpers (2) in Bezug auf die Sollachse. die einen Abschußstand des Flugkörpers mit dem Ziel verbindet, unter Verwendung eines Modells des dynamischen Verhaltens des Flugkörpers (2) sowie eines kinematischen Modells des Ziels (3);

   - zweite Mittel (14) zur Erstellung von Verfolgungsbefehlen und Sollwerten für die Regelung des Flugkörpers (2), die mit den genannten ersten Mitteln (13) verbunden sind; und

   - dritte Mittel (16) zur Erstellung des auf den Flugkörper (2) angewandten Steuerbefehls, die mit den genannten ersten (13) und zweiten (14) Mitteln so verbunden sind, daß sie einerseits den genannten ersten Mitteln (13) den Steuerbefehl liefern und andererseits von den genannten ersten Mitteln (13) den geschätzten Zustand des Flugkörpers und von den genannten zweiten Mitteln (14) die Verfolgungsbefehle sowie die Regelungssollwerte erhalten

2. System gemäß Anspruch 1,
   dadurch gekennzeichnet, daß die genannten ersten Mittel zur Einschätzung der Bewegungen des Ziels aus einem Kalman-Filter (13) bestehen.

3. System gemäß Anspruch 1 oder 2,
   dadurch gekennzeichnet, daß es vierte wahlweise Mittel (20) zur Messung von anderen Parametern als der Position des Flugkörpers in Bezug auf die Sollachse umfaßt, die zum einen mit dem genannten Flugkörper (2) und zum anderen mit den genannten ersten Mitteln (13) verbunden sind.

4. System gemäß einem der Ansprüche 1 bis 3, dadurch gekennzeichnet, daß es fünfte Mittel (9) umfaßt, die zur Änderung der Kennmarke der Position des Flugkörpers (2) von einer festen Kennmarke in eine sich bewegende Kennmarke, die mit dem Ziel (3) verbunden ist, dienen, wobei diese Mittel mit den genannten Abstandsmeßmitteln (5) verbunden sind.

9

$y_C$ — 6 — $U$ — 7 — 2 — 21 — 20 — 10 — 9 — 12 — 11 — 5 — $y_C$ — 8 — 22 — 1 — $C_i . X_i$

## FIG.1

EP 0 751 367 B1

EP 0 751 367 B1

$y_C$

8

$C_i . X_i$

$\overset{\bullet}{\hat{X}} = A.\hat{X} + B.U + K.(Y - C.\hat{X})$

13

$\left.\begin{array}{c} \hat{X}_i \\ \overset{\bullet}{\hat{y}_C} \\ \hat{y}_C \end{array}\right\} \hat{X}'$

6

$\left.\begin{array}{c} \overset{\bullet\bullet}{\hat{G}} \\ \overset{\bullet}{\hat{G}} \\ \hat{G} \end{array}\right.$

15

14

$U_C$
$X_C$

18

$U = U_C - L.(\hat{X}' - X_C)$

16

19

$U$

7

17

# FIG. 2

FIG. 3